# EUROPEAN PATENT SPECIFICATION

(11) **EP 4 581 412 B1**
(45) Date of publication and mention of the grant of the patent: **28.10.2026**
(21) Application number: 23776149.9
(22) Date of filing: 28.08.2023
(51) Int. Cl.: G02B 6/38

(54) **OPTICAL CONNECTOR WITH ROTATABLE BOOT AND RELATED METHODS**
OPTISCHER VERBINDER MIT DREHBAREM MANTEL UND ZUGEHÖRIGE VERFAHREN
CONNECTEUR OPTIQUE À GAINE ROTATIVE ET PROCÉDÉS ASSOCIÉS

(30) Priority: 29.08.2022 US 202263401732 P; 30.09.2022 US 202263411655 P
(43) Date of publication of application: 09.07.2025
(73) Proprietor: Corning Research & Development Corporation, Corning, New York 14831 (US)
(72) Inventor: MCKINNEY, Larry Todd, Keller, Texas 76248 (US); PARKMAN, III, Louis Edward, Keller, Texas 76248 (US)
(74) Representative: Reddie & Grose LLP
(86) International application number: PCT/US2023/031213
(87) International publication number: WO 2024/049723

(56) References cited:
- WO-A1-2019/191522
- US-A1- 2021 149 120
- US-A1- 2021 263 238
- US-A1- 2021 263 245

## Description

### PRIORITY APPLICATIONS

This application claims the benefit of priority of U.S. Provisional Application No. 63/411,655, filed on September 30, 2022, and U.S. Provisional Application No. 63/401,732, filed on August 29, 2022.

### BACKGROUND

This disclosure relates generally to telecommunication cable assemblies, such as optical cable assemblies. More particularly, this disclosure relates to optical connectors that including latching features for engaging an adapter and an unlocking mechanism to assist with de-latching from the adapter and/or reversing polarity.

In a telecommunications system that uses optical fibers, there are typically many locations where cables that carry the optical fibers connect to equipment or other cables. Optical connectors are often provided on the ends of the cables to conveniently provide these connections. The connectors are designed to engage adapters that align the connectors with other connectors or other components so that data can be transmitted between the mated components.

Some connectors include one or more latch arms that extend outwardly from a connector body. Each latch arm is designed to engage the adapter in a manner that retains the connector in the adapter. To remove the connector from the adapter, each latch arm is first flexed toward the connector body to release the engagement with the adapter. Some connectors are designed with components to assist such flexing/actuation of the latch arm(s) and, in some cases, also assist with removing the connector from an adapter.

For example, LC connectors are widely used in data centers and other environments where a high density of optical connections are desired. These types of connectors are often used in a duplex configuration due to the bi-directional nature of data center networks. Many LC duplex connector designs integrate two LC connector sub-assemblies with a common boot ("uniboot") to terminate a two-fiber cable or a two-fiber fanout leg of a larger cable. Some of the designs include a housing, pull tab, or some other component configured to assist with actuating the latch arms of the connector sub-assemblies. The designs, however, can be relatively complex, perform poorly, have limited functionality, and/or require a large number of specially-designed components.

Similar challenges exist with respect to other features for duplex connectors. For example, many LC duplex uniboot connectors are configured to allow polarity of the connector to be reversed. Polarity exists because one of the LC connector sub-assemblies transmits data in one direction (an "A" direction) and the other LC connector sub-assembly transmits data in an opposite direction (a "B" direction), such that the duplex connector may have an A-B configuration or B-A configuration with respect to a defined orientation of the connector. Changing from one configuration to other in the field can be desirable, and many designs now exist with this feature. However, the designs can require complex components or processes to reverse polarity.

As can be appreciated, designing duplex connectors (and especially LC duplex uniboot connectors) with multiple features can be challenging, and there remains room for improvement over known designs.

US2021/263245 relates to an optical connector and optical connector module. The optical connector is coupled to an optical receptacle, wherein the optical connector comprises an outer housing, a coupling module, and a latch structure. The coupling module is disposed in the outer housing for slidably connecting to the outer housing. When the latch structure is operated at a first position, the optical connector is unable to be taken away from the optical receptacle, and when the latch structure is operated at a second position, the outer housing is allowed to slide relative to the coupling module whereby the optical connector is taken away from the optical receptacle.

US2021/0149120 discloses a reversible polarity fiber optic connector. The connector includes an outer housing including a polarity key for coupling the outer housing to a fiber optic receptacle in only one orientation. A ferrule assembly is received in the outer housing in a first position corresponding to a first polarity of the fiber optic connector and in a second position corresponding to a second polarity of the fiber optic connector. The ferrule assembly forms an optical connection with the fiber optic receptacle. A boot assembly is releasably connected to the outer housing to enable the ferrule assembly to be inserted into and removed from the outer housing. The boot assembly includes a rotor rotatable between locked and release positions. The rotor includes a blocking portion to block disconnection of the boot assembly with the outer housing in the locked position and to permit disconnection of the boot assembly with the outer housing in the release position.

WO2019/191522 relates to an optical connector holding two or more LC- type optical ferrules. The optical connector includes an outer body, an inner front body accommodating the two or more LC-type optical ferrules, ferrule springs for urging the optical ferrules towards a mating connection, and a back body for supporting the ferrule springs. A removable inner front body for polarity change is disclosed. A multi- purpose rotatable boot assembly for polarity change is disclosed. The multi-purpose boot assembly can be pushed and pulled to insert and remove the micro connector from an adapter receptacle.

US2021/263238 discusses an optical connector electrically coupled to an optical receptacle. The optical connector comprises a connector body, and a sliding member. The connector body inserted into the optical receptacle comprises a housing and a boot structure detachably arranged in the housing. The sliding member is slidably coupled to the housing wherein the boot structure is restrained inside the housing or is removed from the housing according to a sliding position of the sliding member.

### SUMMARY

The invention is defined in the independent claims to which reference should now be made. Advantageous features are set forth in the dependent claims.

An optical connector includes a connector sub-assembly, an inner housing having a front side that receives a rear portion of the connector sub-assembly, a boot extending from a rear side of the inner housing, and an outer housing coupled to the boot. The outer housing and the boot are configured to rotate relative to each other about a longitudinal axis of the optical connector but move together along the longitudinal axis. The boot can be rotated relative to the inner housing about the longitudinal axis between a first rotational position and a second rotational position. In the first rotational position, which may be considered a "locked" position, relative movement between the boot and the inner housing along the longitudinal axis is limited so that the outer housing is not configured to move axially rearward with the boot to depress an end portion of a latch arm of the connector sub-assembly. In the second rotational position, which may be considered an "unlocked" position, relative movement between the boot and the inner housing along the longitudinal axis is permitted so that the outer housing is configured to move axially rearward with the boot to depress the end portion of the latch arm.

The connector sub-assembly includes a ferrule configured to support at least one optical fiber, a connector body surrounding at least a portion of the ferrule, and the latch arm, which extends outwardly and rearwardly from a front portion of the connector body. As an example, the connector sub-assembly may be an LC connector. The outer housing extends over at least the end portion of the latch arm. As mentioned above, the outer housing can be moved rearward when the boot is in the second rotational position to depress the end portion of the latch arm so that the end portion moves more toward the connector body.

Aspects of this disclosure may apply to connectors with a single connector sub-assembly or multiple connector sub-assemblies. To this end, the connector sub-assembly referred to above may be a first connector sub-assembly in some embodiments, and the optical connector may further include a second connector sub-assembly having a rear portion received in the front side of the inner housing. The second connector sub-assembly may have a construction similar to the first connector sub-assembly. For example, the second connector sub-assembly may also include a latch arm having a distal end portion configured to be depressed by the outer housing when the outer housing moves rearward.

The rear portion of the connector sub-assembly may be received in the front side of inner housing in a manner that allows the connector sub-assembly to be rotated relative to the inner housing about a connector sub-assembly axis. In other words, the connector sub-assembly need not be removed from the inner housing for rotation. Such relative rotation may be limited by the outer housing in various ways, or not at all. For example, in some embodiments, when the boot is in the first rotational position, the outer housing is configured to restrict the connector sub-assembly from rotating about the connector sub-assembly axis, or at least restrict rotation any meaningful amount. Thus, although some rotational "play" may be allowed between the connector sub-assembly and the outer housing in some embodiments, the connector sub-assembly is prevented from rotating to a substantially different orientation, such as being prevented from rotating more than 90 degrees or even less than that, such as no more than 45 degrees, 15 degrees, 10 degrees, etc. (different embodiments can provide different amounts of restriction).

In the second rotational position of the boot, relative movement between the boot and the inner housing along the longitudinal axis is permitted so that the outer housing is configured to move axially with the boot a sufficient distance to allow the connector sub-assembly to rotate to a substantially different orientation, such as an orientation where the connector sub-assembly is rotated more than 90 degrees about the connector sub-assembly axis. The connector sub-assembly may be configured to rotate to the opposite side of the connector, i.e. 180 degrees about the connector sub-assembly axis, for the purpose of reversing the polarity of the connector.

The outer housing may still be configured to restrict substantial rotation of the connector sub-assembly even when the boot is in the second rotational position. For example, even when the outer housing is moved rearward when the boot is in the second rotational position, there may be a limit to such movement so that the outer housing still prevents the connector sub-assembly from rotating more than a meaningful amount about the connector sub-assembly axis. The amount is no more than 90 degrees, and may be as small as no more than 10 degrees in some embodiments. To allow rotation more than a meaningful amount, the boot may be rotatable relative to the inner housing about the longitudinal axis between the second rotational position and a third rotational position. In the third rotational position, relative movement between the boot and the inner housing along the longitudinal axis is permitted so that the outer housing is configured to move axially with the boot a sufficient distance to allow the connector sub-assembly to rotate a large amount, such as more than 90 degrees about the connector sub-assembly axis. The connector sub-assembly may be configured to rotate to the opposite side of the connector, i.e. 180 degrees about the connector sub-assembly axis, for the purpose of reversing the polarity of the connector.

In some embodiments the boot includes a locking arm having a catch. The locking arm may be part of a substrate component, and the boot may also include a strain relief component that is coupled to the substrate component so that the boot has a two-piece construction. In other embodiments the boot may have a one-piece construction, however. In the first rotational position of the boot, the catch is configured to engage a surface of the inner housing to limit relative limit relative movement between the boot and the inner housing along the longitudinal axis to a first distance. The first distance may be minimal, such as substantially zero. The minimal to no axial movement keeps the outer housing in a position that does not cause the distal end portion of the latch arm to be depressed.

Another aspect of this disclosure is an optical connector comprising a connector sub-assembly that includes: a ferrule configured to support at least one optical fiber; a connector body surrounding at least a portion of the ferrule; and a latch arm extending outwardly and rearwardly from a front portion of the connector body, wherein an end portion the latch arm can be depressed toward the connector body. The optical connectors also comprises: an inner housing having a front side that receives a rear portion of the connector sub-assembly, wherein the inner housing is configured to allow the connector sub-assembly to be rotated relative to the inner housing about a connector sub-assembly axis while the rear portion is received by the inner housing; a boot extending from a rear side of the inner housing; and an outer housing coupled to the boot and extending over at least the end portion of the latch arm of the connector sub-assembly, wherein the outer housing and the boot are configured to rotate relative to each other about a longitudinal axis of the optical connector but move together along the longitudinal axis. The boot is rotatable relative to the inner housing about the longitudinal axis between a first rotational position and at least one other rotational position. In the first rotational position, relative movement between the boot and the inner housing along the longitudinal axis is limited so that the outer housing is configured to restrict the connector sub-assembly from rotating more than 90 degrees about the connector sub-assembly axis. In the at least one other rotational position, relative movement between the boot and the inner housing along the longitudinal axis is permitted so that the outer housing is configured to move axially rearward with the boot to a position where the outer housing does not restrict the connector sub-assembly from rotating more than 90 degrees about the connector sub-assembly axis.

Cable assemblies including optical connectors like those summarized above are also disclosed. A cable assembly may comprise a cable that includes at least one optical fiber, and an optical connector according to one or more of the preceding paragraphs may be secured to an end of the cable.

Also disclosed, is a method of removing an optical connector from an adapter. The optical connector in such method may be one according to one or more paragraphs above. The method comprises rotating the boot relative to the inner housing about the longitudinal axis of the connector between the first rotational position and the second rotational position; and, with the boot in the second rotational position, moving the boot relative to the inner housing rearward along the longitudinal axis so that the outer housing moves axially rearward with the boot to depress the end portion of the latch arm of the connector sub-assembly.

Methods of reversing polarity of an optical connector are provided, particularly for embodiments where: the boot is rotatable relative to the inner housing about the longitudinal axis between a first rotational position and at least one other rotational position; and, in the first rotational position, relative movement between the boot and the inner housing along the longitudinal axis is limited so that the outer housing is configured to restrict the connector sub-assembly from rotating more than 90 degrees about the connector sub-assembly axis. One such method comprises rotating the boot relative to the inner housing about the longitudinal axis of the connector between the first rotational position and at least one other rotational position. With the boot in the at least one other position, the method further comprises moving the boot relative to the inner housing along the longitudinal axis so that the outer housing moves axially rearward with the boot to a position where the outer housing does not restrict the connector sub-assembly from rotating more than 90 degrees about the connector sub-assembly axis. The method also comprises rotating the connector sub-assembly approximately 180 degrees about the connector sub-assembly axis.

Additional features and advantages will be set out in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### BRIEF DESCRIPTION OF THE DRAWINGS

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a perspective view of one embodiment of an end of an optical cable assembly that includes an optical connector according to the invention.
Fig. 2 is a side view of the optical connector of Fig. 1, partially shown in cross-section, with optical fibers of the cable assembly not shown to simplify the drawing.
Fig. 3 is a cross-sectional side view of a connector sub-assembly used in the optical connector of Fig. 1.
Fig. 4 is another perspective view of the optical connector of Fig. 1, but with various components of the optical connector not shown to better view a base of an inner housing and a boot of the optical connector.
Fig. 5 is a perspective view similar to Fig. 4, but shows the inner housing of the optical connector including a cover/lid coupled to the base.
Fig. 6 is an exploded perspective view of an optical cable and various components of the optical connector of Fig. 1, namely a transition tube, crimp band, and heat shrink tube.
Fig. 7 is a perspective view illustrating the optical cable of Fig. 6 secured to the components of the optical connector that are shown in Fig. 6.
Fig. 8 is a perspective view of the boot of the optical connector of Fig. 1, wherein the boot includes a substrate component and a strain relief component assembled together.
Fig. 9 is a perspective view of the substrate component of the boot in isolation.
Fig. 10 is another perspective view of the optical connector of Fig. 1, showing the same components as Fig. 5, but from a different orientation and with the boot of the optical connector in a first rotational position that is considered a "locked" position.
Fig. 10A is a close-up perspective view of a portion of the optical connector shown in Fig. 10.
Fig. 11 is a perspective view similar to Fig. 10, but illustrates the boot of the optical connector in a second rotational position that is considered an "unlocked" position.
Fig. 11A is a close-up perspective view of a portion of the optical connector shown in Fig. 11.
Fig. 12 is another perspective view of the optical connector of Fig. 1, but with the boot and the outer housing moved axially rearward (i.e., retracted) relative to other components of the optical connector.
Fig. 13 is a side view of the optical connector of Fig. 1, partially shown in cross-section, with the boot and the outer housing in the retracted position of Fig. 12, and schematically illustrates how the outer housing is configured to depress latch arms of the connector sub-assemblies when moving to the retracted position.
Fig. 14 is a perspective view showing the optical connector of Fig. 1 mated with an adapter, with the boot of the optical connector in the first rotational position.
Fig. 15 is a perspective view similar to Fig. 14, but illustrates the boot of the optical connector rotated about a longitudinal axis of the optical connector to the second rotational position.
Fig. 16 is a perspective similar to Fig. 15, but illustrates the optical connector removed/disengaged from the adapter.
Figs. 17-23 are perspective views sequentially illustrating a process for reversing polarity of the optical connector of Fig. 1, with some the figures illustrating the outer housing of the optical connector as being transparent to aid understanding.
Fig. 24 is a perspective a portion of an optical connector according to another embodiment of this disclosure, wherein an outer housing of the optical connector in the illustrated embodiment is shown partially cut-away to better visualize engagement between the boot and the inner housing of the illustrated embodiment, and wherein the boot is in a first rotation position that represents a locked position.
Fig. 25 is a perspective view similar to Fig. 24, but omits the outer housing and illustrates the boot rotated to a second rotational position that represents an unlocked position.
Fig. 26 is a perspective view of an example optical connector that may correspond to the optical connector whose components are illustrated in Figs. 24 and 25, wherein the optical connector is illustrated with the boot in the locked position.
Fig. 27 is a perspective view of the optical connector of Fig. 26 after rotating the boot to the unlocked position.
Fig. 28 is a perspective view similar to Fig. 27, but includes various arrows as annotations to schematically represent steps to reverse polarity of the optical connector.

### DETAILED DESCRIPTION

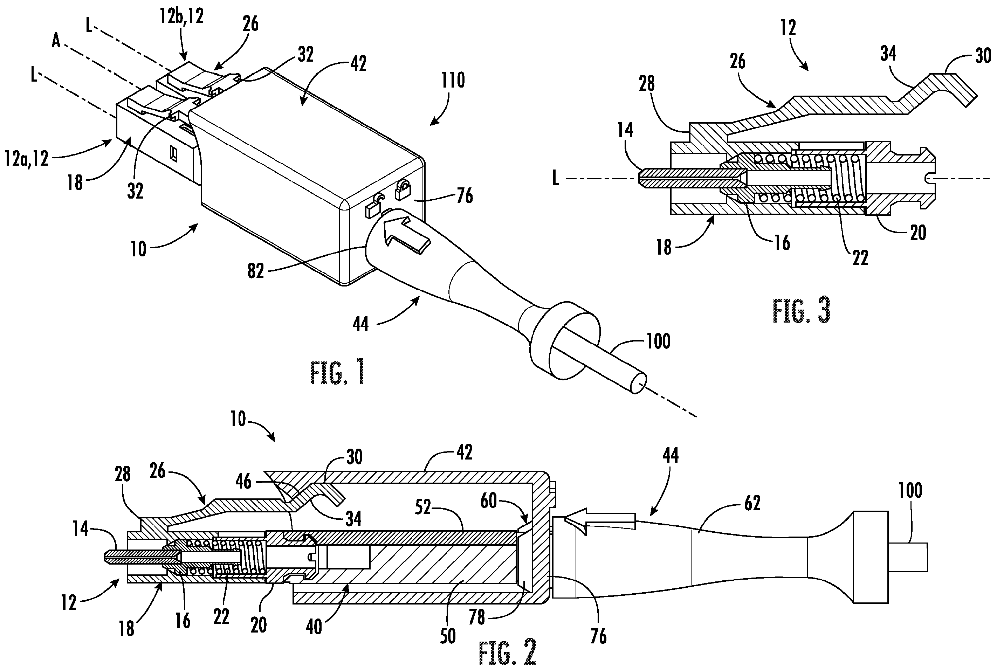

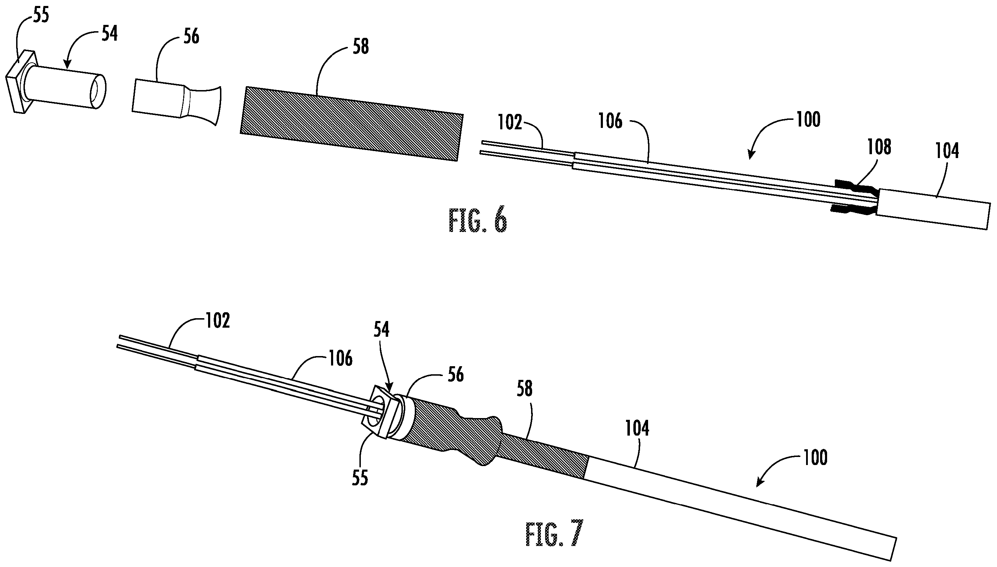

Various embodiments will be further clarified by examples in the description below. In general, the description relates optical connectors and cable assemblies including the same. One example of an optical connector 10 (also referred to as "fiber optic connector 10", or simply "connector 10") is shown in Figs. 1 and 2. The connector 10 is shown in the form of an LC duplex connector (e.g., according to IEC 61754-20:2012) having first and second LC connector sub-assemblies 12a, 12b. Reference number 12 will be used to generically refer to a connector sub-assembly for convenience in the remainder of this detailed description. Again, the connector 10 is merely an example, and persons skilled in optical connectivity will appreciate that features provided in this disclosure may apply to other connector designs, including LC simplex connectors, other types of simplex and duplex connectors, and multifiber connectors. As will be described in greater detail below, the connector 10 terminates a cable 100, and specifically optical fibers 102 (Fig. 6) carried by the cable 100, to form an end portion of a cable assembly 110.

As shown in Figs. 1 and 2, the connector 10 extends along a longitudinal axis A, which is generally centered between the connector sub-assemblies 12 and runs along a length of the connector 10. The connector sub-assembles 12 each extend along a respective longitudinal axis L that is generally parallel to the longitudinal axis A. In this disclosure, references to components rotating refer to rotation about the longitudinal axis A or the longitudinal axis L, the context being clear which of the two is applicable. In simplex connector embodiments (not shown), the longitudinal axis A and the longitudinal axis L may be the same.

Additionally, as used in this disclosure, references to "axial movement," "moving axially," or the like refer to movement along or parallel to the longitudinal axis A. Furthermore, the terms "forward" and "rearward" (or "rear") are relative terms that generally use the orientation of the connector 10 as a reference. For example, a front of the connector 10 is defined by the connector sub-assemblies 12 (e.g., where the connector sub-assemblies 12 present ends of the optical fibers 102 for optical coupling with another connector or device), and a rear of the connector 10 is defined where the connector 10 stops extending over the cable 100. Thus, a forward direction is a direction from the rear of the connector 10 toward the front of the connector 10, along or parallel to the longitudinal axis A. A rearward or backward direction is a direction from the front of the connector 10 toward the rear of the connector 10, along or parallel to the longitudinal axis A. Various components are described in this disclosure as moving forward or rearward relative to one another, and/or moving axially forward or axially rearward.

As shown in Fig. 3, each connector sub-assembly 12 includes a ferrule 14 configured to support an optical fiber 102 (Fig. 6) and a connector body 18 (also referred to as "connector sub-assembly housing 18" or simply "housing 18") surrounding a portion of the ferrule 14. The ferrule 14 extends from a ferrule holder 16 that is retained in the connector body 18. In particular, internal geometry of the connector body 18 prevents the ferrule holder 16 from exiting a front of the connector body 18, and a rear stop component 20 prevents the ferrule holder 16 from exiting a rear of the connector body 18. A spring 22 biases the ferrule holder 16 forward within the connector body 18, away from the rear stop component 20, so that a front end of the ferrule 14 projects beyond the connector body 18. The front end of the ferrule 14 presents the optical fiber 102 for optical coupling with a mating component (e.g., another optical connector).

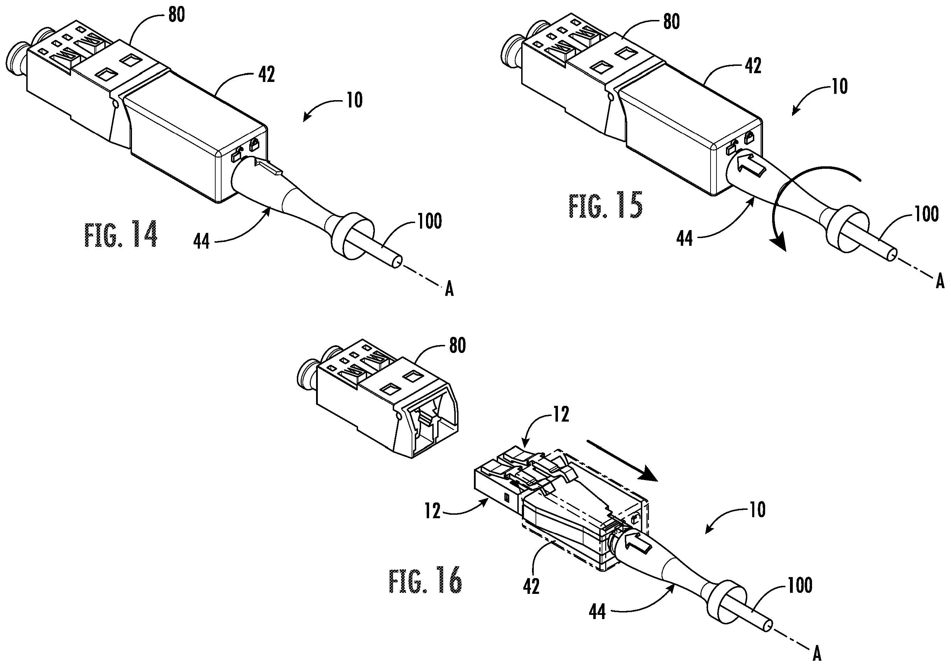

Each connector sub-assembly 12 also includes a latch arm 26 extending outwardly and rearwardly from a front portion of the connector body 18. Thus, the latch arm 26 has a proximal end 28 coupled to the front portion of the connector body 18, a distal end portion 30 spaced from the connector body 18, and latching features 32 (Fig. 1) between the proximal end 28 and distal end portion 30. The latch arm 26 may be depressed or otherwise flexed toward the connector body 18 to release the latching features 32 from engagement with corresponding latching features of an adapter (not shown in Figs. 1-3). Thus, as used in this disclosure, references to the latch arm 26 depressing or being depressed refer to intentional movement of the latch arm 26 for assisting with or causing disengagement from an adapter. That is, depressing the latch arm 26 in this disclosure refers to actuation or movement for a desired purpose; something more than incidental flexing or movement of the latch arm 26 downward that would not affect engagement with an adapter or otherwise cause the latching features 32 to move a relevant amount. In some embodiments, the latch arm 26 may be formed integrally with the connector body 18 such that the latch arm 26 is configured to flex toward a main portion of the connector body 18. As will be described in greater detail below, in the embodiment shown, the distal end portion 30 of the latch arm 26 defines a ramp or actuation surface 34 to assist with removing the connector 10 from an adapter (e.g., adapter 80 in Figs. 14-16).

Figs. 1 and 2 illustrate how the connector 10 further includes an inner housing 40 that holds a rear portion of each connector sub-assembly 12, which in the embodiment shown is defined by the rear stop components 20. In alternative embodiments, the rear portions of the connector sub-assemblies may be defined by the connector bodies 18. The connector 10 also includes an outer housing 42 that extends over the inner housing 40 and the distal end portions 30 of the latch arms 26, and a strain relief assembly 44 ("boot 44") that is coupled to the outer housing 42 and that extends rearward from the inner housing 40. As will be described in greater detail below, the outer housing 42 and boot 44 are configured to move together in an axial direction, relative to the inner housing 40 (and remainder of the connector 10). Doing so causes an engagement surface 46 of the outer housing 42 to contact and move over the actuation surfaces 34 of the latch arms 26, which results in the distal end portions 30 of the latch arms 26 being depressed (pressed downward) so that the latch arms 26 flex toward the connector bodies 18. Before discussing these aspects further, additional details related to the inner housing 40, outer housing 42, and boot 44 will first be described.

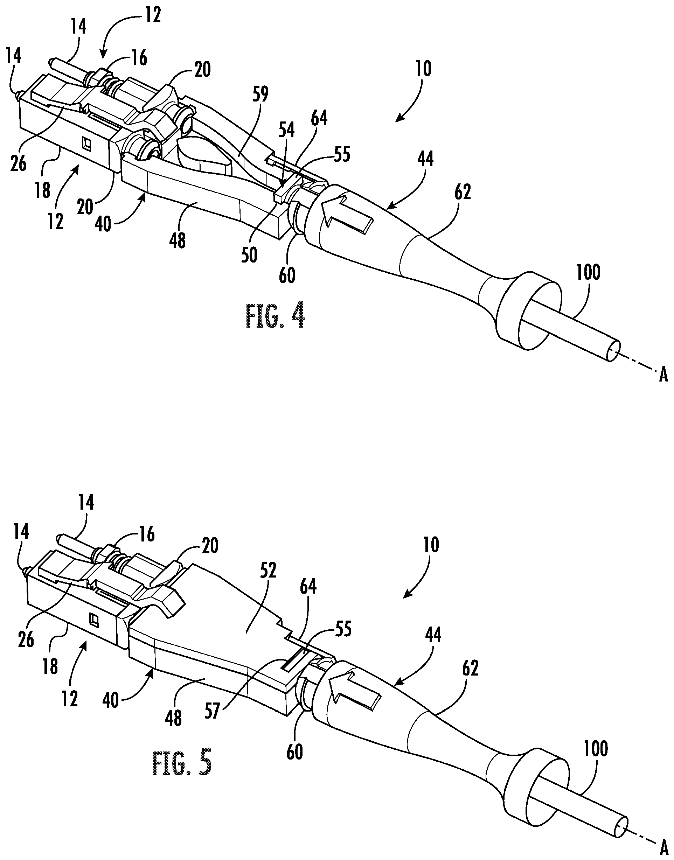

To this end, Figs. 4 and 5 illustrate the connector 10 with the outer housing 42 hidden to better show internal components of the connector 10. The connector body 18 of one of the connector sub-assemblies 12 is also hidden from view. The inner housing 40 has a two-piece construction in the embodiment shown, comprising a base 48 and a cover 52 coupled to the base 48. The coupling may be achieved through any technique, including but not limited to using a snap-fit, an interference fit, and/or adhesive. The cover 52 is hidden in Fig. 4 such that only the base 48 is shown. The base 48 holds portions of the rear stop components 20 at a front side of the base 48 and a transition tube 54 at a rear side of the base 48. In some embodiments, the transition tube 54 may be a component to which strength members 108 (Fig. 6) of the cable 100 are crimped or otherwise secured.

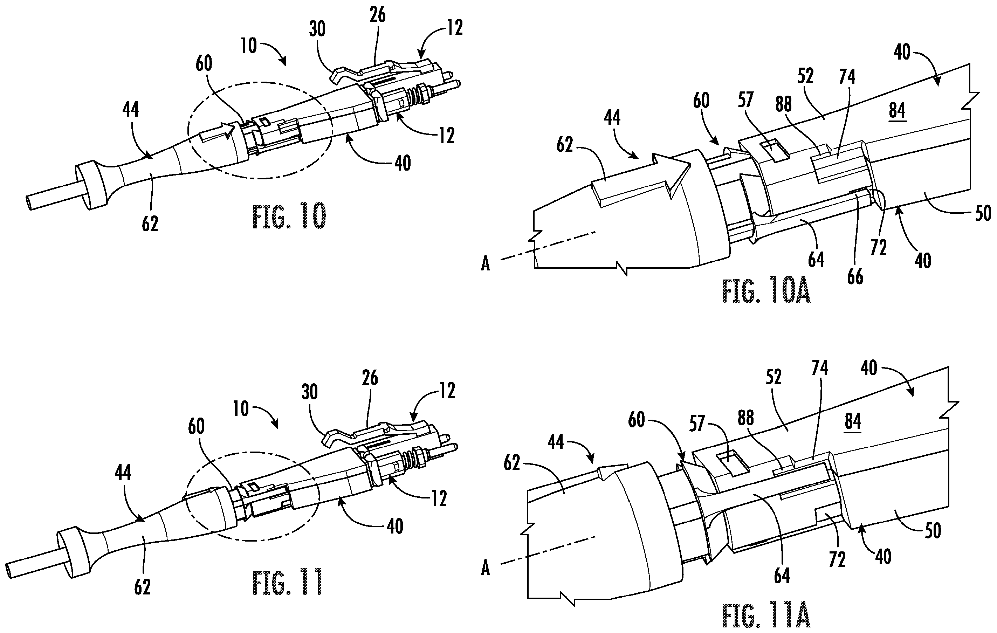

More specifically, and with additional reference to Figs. 6 and 7, the transition tube 54 in the embodiment shown is generally cylindrical with a flange 55 defined at one end. The flange 55 is received in a cutout or slot 50 (Fig. 4) defined in the base 48 of the connector body 18 to couple the transition tube 54 to the rear of the base 48. The cover 52 of the inner housing 40 may also have a cutout or slot 57 (see Fig. 10A) to receive the flange 55 of the transition tube 54. Fig. 6 illustrates a crimp band 56 and heat shrink tube 58 for securing the cable 100 to the transition tube 54. The cable 100 is prepared so that two optical fibers 102 that are carried by the cable 100 extend a desired length from an end of a cable jacket 104. End sections of the optical fibers 102 are stripped of coating material 106 over a desired length such that the end sections comprise "bare glass" or "exposed glass" sections. The cable 100 is also prepared so that strength members 108, which may be in the form of aramid yarn, extend a desired length from the end of the cable jacket 104.

Although Fig. 6 illustrates the crimp band 56 and heat shrink tube 58 exploded from the cable 100, the heat shrink tube 58 and crimp band 56 are placed over the cable jacket 104 before or after preparing the cable 100. According to one example method, the transition tube 54 is advanced over the optical fibers 102 to be proximate the end of the cable jacket 104, at which point the strength members 108 are flared over a rear portion of the transition tube 54. The crimp band 56 is then slid forward from the cable jacket 104 to extend over the rear portion of the transition tube 54 and the flared-out strength members 108, at which point the crimp band 56 is crimped onto the transition tube 54 to secure the strength members 108 (and, therefore, cable 100) to the transition tube 54. Finally, the heat shrink tube 58 is advanced to be positioned over at least a portion of the crimp band 56 and an end portion of the cable jacket 104. The heat shrink tube 58 is then activated (i.e., heated) to shrink down over the interface between the cable 100 and connector components, resulting in the arrangement shown in Fig. 7. The transition tube 54 is then coupled to the base 48 of the connector body 18 in the manner described above. Thus, in the example described above and other embodiments, if desired, the cable 100 may be secured to the transition tube 54 independently from other connector components. In alternative embodiments, however, the transition tube 54 may be coupled to the connector body 18 prior to securing the cable 100 to the transition tube 54.

Referring back to Fig. 4, channels or troughs 59 are defined by the base 48 so that the optical fibers 102 (Fig. 6) from the cable 100 can be routed within the base 48 to the connector sub-assemblies 12. Specifically, two optical fibers 102 may extend from the cable 100 and through the transition tube 54 into the base 48, with each optical fiber 102 then extending within the base 48 (in one of the channels 59) to a respective one of the connector sub-assemblies 12 at the front side of the base 48. The cover 52 may be coupled to the base 48 by a snap-fit, adhesive, fasteners, or any other suitable coupling technique, resulting in the channels 59 being within an interior of the inner housing 40.

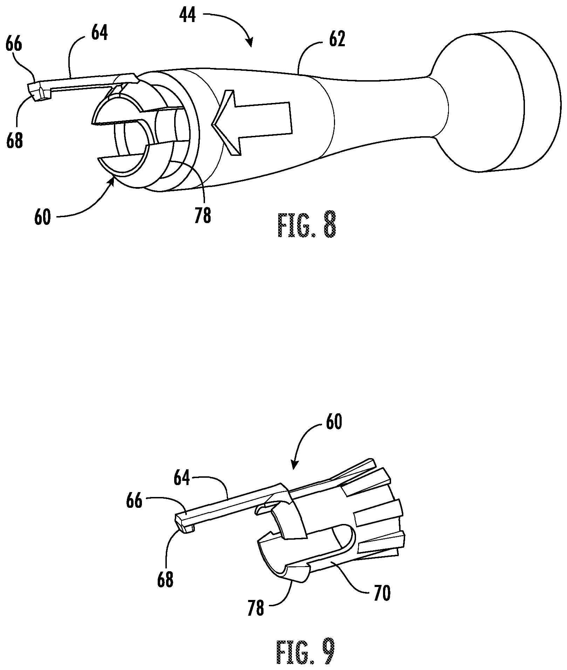

The boot 44 in the embodiment shown comprises a substrate 60 (also referred to as locking component 60) and a strain relief component 62 that are coupled together, which can be better understood with additional reference to Figs. 8 and 9. As shown in Figs. 8 and 9, the substrate 60 includes a locking arm 64 that has a terminal end portion 66 defining a catch 68, which may also referred to as a latch. The locking arm 64 extends from a base portion 70 of the substrate 60, which may be generally cylindrical. The strain relief component 62 is received over at least some length of the base portion 70 of the substrate 60. The substrate 60 and strain relief component 62 may be formed from respective first and second materials, with the second material being less rigid than the first material. For example, in some embodiments the second material may be an elastomer, such as thermoplastic polyurethane, and the first material may be something having a higher modulus of elasticity and/or shear modulus, such as a polycarbonate or metal. The strain relief component 62 may be overmolded onto the base portion 70 of the substrate 60 or coupled to the base portion 70 by a friction/interference fit so that the substrate 60 and strain relief component 62 together function as an assembled unit. Similar two-piece strain relief assembly (i.e., boot) designs and associated advantages are disclosed in U.S. Patent Nos. 9,551,842 and 10,261,268.

Referring back to Figs. 4 and 5, the substrate 60 is received over a rear portion of the transition tube 54 and is generally behind rear side of the inner housing 40, except that the locking arm 64 of the substrate 60 extends over a portion of the inner housing 40. The boot 44 can be rotated about the longitudinal axis A of the connector 10 to move the locking arm 64 to different positions on the inner housing 40, with some positions allowing rearward movement of the boot 44 relative to the inner housing 40 along the longitudinal axis A.

In particular, Figs. 10 and 10A illustrate how the catch 68 (obstructed from view) on the terminal end portion 66 of the locking arm 64 may be received in a first slot 72 defined on an exterior of the inner housing 40. The first slot 72 and the catch 68 are designed similar in size so that there is little to no freedom for the locking arm 64 (and, therefore, the boot 44) to move axially relative to the inner housing 40 (and, therefore, not move relative to the connector sub-assemblies 12). The first slot 72 and catch 68 are also shaped to inhibit the catch 68 from sliding out of the first slot 72 in an axial direction. The catch 68 instead is configured to engage a rear surface of the first slot 72 and thereby prevent the boot 44 from moving rearward along the longitudinal axis A relative to the inner housing 40. The position of the boot 44 in Figs. 10 and 10A is referred to in this disclosure as a "first rotational position" or "locked position." One of the sidewalls of the first slot 72 defines a radial flat that blocks the catch 68 from rotating clockwise about the longitudinal axis A in Figs. 10 and 10A. In other words, the first slot 72 is designed to prevent the boot 44 from rotating beyond the first rotational position in one direction about the longitudinal axis A. The boot 44, however, may be able to rotate in an opposite direction about the longitudinal axis A.

In particular, and as shown in Figs. 11 and 11A, the boot 44 may be rotated about the longitudinal axis A so that the catch 68 (still obstructed from view) on the terminal end portion 66 of the locking arm 64 is received in a second slot 74 defined on the exterior of the inner housing 40. The rotation relative to the inner housing 40 may be possible by way of a circumferentially-extending slot (not shown) interconnecting the first and second slots 72, 74, or by way of shaping the catch 68 and the first slot 72 in a manner intended to allow the relative rotation. For example, one of the sidewalls of the first and slot 72 may be angled to act as a ramp so that the catch 68 of the locking arm 64 can slide out of the first slot 72 when the boot 44 is rotated in a direction toward the second rotational position. The catch 68 may also be shaped with angled sidewalls. Additionally, the locking arm 64 is elongated and may be configured to flex radially outward in such embodiments to help allow the catch 68 to travel out of the first slot 72 and onto the surface of the inner housing 40 that is between the first and second slots 72, 74, when the boot 44 is rotated in a direction toward the second rotational position.

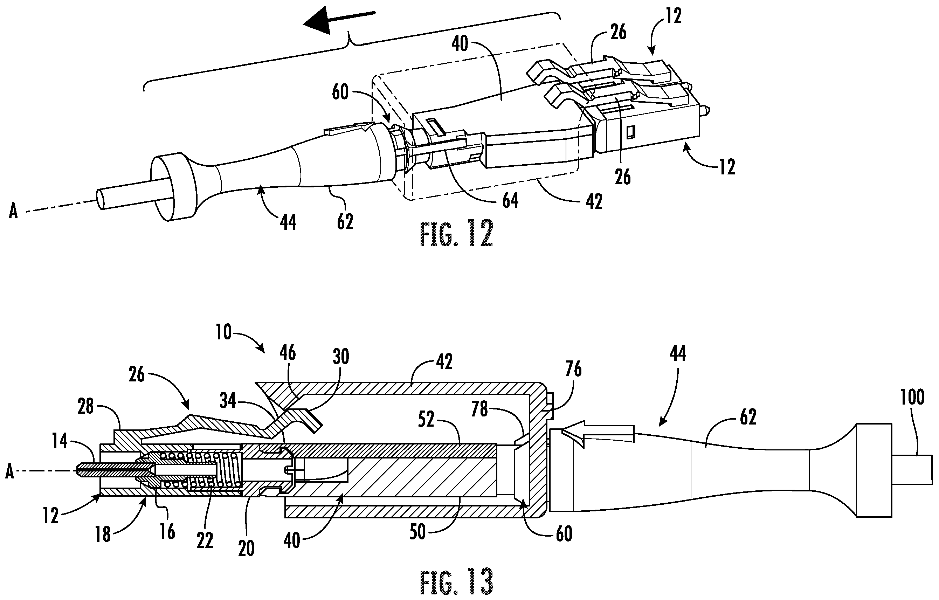

In the embodiment shown, the second slot 74 is elongated in the axial direction relative to the first slot 72. As a result, and as will be discussed below with reference to Figs. 12 and 13, the locking arm 64 (and, therefore, the boot 44) can move axially rearward at least a certain distance relative to the inner housing 40 (and, therefore, relative to the connector sub-assemblies 12). The distance is sufficient for the boot 44 to move the outer housing 42 (which is coupled to be the boot 44) rearward enough to depress the distal end portions 30 of the latch arms 26, as will be described further below. In the embodiment shown in Fig. 11 and 11A, eventually the catch 68 of the locking arm 64 engages a surface of the inner housing 40 that defines an end of the second slot 74 to stop further axial movement. The rotational position of the boot 44 in Figs. 11 and 11A is referred to in this disclosure as a "second rotational position" or "unlocked position."

As can be appreciated from the discussion above, the boot 44 is movable relative to the inner housing 40 between a first rotational, locked position and a second rotational, unlocked position, with the latter permitting the boot 44 to move axially relative to the inner housing 40. The outer housing 42 (Fig. 2) is coupled to the boot 44 in a manner that: (a) allows at least some relative rotation between the boot 44 and the outer housing 42, yet (b) prevents or substantially constrains relative axial movement between the boot 44 and the outer housing 42. The substrate 60, for example, may extend through an opening 82 (Fig. 1) in a rear wall 76 of the outer housing 42 that allows for the boot 44 to move from the first rotational position to the second rotational position without also causing the outer housing 42 to rotate. The rear wall 76, however, may be retained between an end of the strain relief component 62 and a flange 78 (Figs. 2 and 13) defined by the substrate 60, effectively "sandwiched" between them to prevent or substantially constrain relative axial movement.

Figs. 12 and 13 illustrate moving the boot 44 and outer housing 42 together in an axial direction when the boot 44 is in the second rotational, unlocked position. The axial movement is relative to the remainder of the connector 10 so that the outer housing 42 actuates the latch arms 26 of the connector sub-assemblies 12. In particular, when the boot 44 is in the second rotational position and moved axially rearward (i.e., retracted) relative to the inner housing 40, the outer housing 42 moves together with the boot 44 as discussed above. This movement can occur relative to not just the inner housing 40, but also the remainder of the connector 10, including the connector sub-assemblies 12. As a result, the engagement surface 46 of the outer housing 42 contacts the actuation surfaces 34 on the distal end portions 30 of the latch arms 26. The latch arms 26 flex toward the main portion of the connector body 18 to accommodate the engagement surface 46 moving over the actuation surfaces 34, as schematically illustrated in Fig. 13. This flexing/depressing of the latch arms 26 may be sufficient to release engagement between the latching features 32 (Fig. 1) of the latch arms 26 and latching features (not shown) inside an adapter.

To this end, Figs. 14-16 illustrate one example of how the connector 10 may operate. In Fig. 14, the connector 10 is shown as being mated to an adapter 80. The latching features 32 (Fig. 1) of the connector sub-assemblies 12 engage corresponding latching features (not shown) of the adapter 80 to secure the connector 10 to the adapter 80. Such engagement for LC connectors is well-known and will not be described in further detail. The boot 44 is in the first rotational, locked position in Fig. 14 such that pulling the boot 44 rearward relative to the inner housing 40 is prevented or very limited for the reasons discussed above with reference to Figs. 10 and 10A. Such pulling does not result in the outer housing 42 depressing the latch arms 26 of the connector sub-assemblies 12. The same is true if the outer housing 42 is pulled rearward since the outer housing 42 is only configured to move axially when the boot 44 moves axially.

In Fig. 15, the boot 44 is rotated to the second rotational, unlocked position discussed above with reference to Figs. 11 and 11A. In this position, the boot 44 can then be moved axially rearward relative to the inner housing 40. In the embodiment shown, the second slot 74 (Fig. 11A) is designed to allow sufficient axial movement for the outer housing 42 to depress the latch arms 26 of the connector sub-assemblies 12, as discussed above with reference to Figs. 12 and 13. The flexing of the latch arms 26 disengages their respective latching features 32 (Fig. 1) from the latching features of the adapter 80. Thus, the connector 10 may then be removed from the adapter 80 by further pulling the boot 44 away from the adapter 80, as shown in Fig. 16. The outer housing 42 can be pulled with the boot 44 or instead of the boot 44 to have the same effect when the boot 44 is in the second rotational position.

Advantageously, in some embodiments the connector 10 may include the ability to reverse polarity. For example, if one of the connector sub-assemblies 12 is designed as "A" and the other designated as "B", the connector 10 may have either an A-B configuration or B-A configuration relative to a given orientation of the connector 10. Which connector sub-assembly 12 is on which side (i.e., left or right) of the connector 10 in the given orientation can be reversed. An example way to achieve this functionality is for the boot 44 to be further configured to rotate relative to the inner housing 40 to a third rotational position (also referred to in this disclosure as a "free position"). This can be better understood with reference back to Figs. 10A and 11A.

As shown Figs. 10A and 11A, the inner housing 40 in the embodiment shown defines an outer surface 84 adjacent the second slot 74. The boot 44 may be rotated relative to the inner housing 40 so that the locking arm 64 extends over the outer surface 84. As with rotation of the boot 44 from the first rotational position to the second rotational position, such rotation to the third rotational position may be possible by shaping the catch 68 on the terminal end portion 66 of the locking arm 64 and/or sidewalls of the second slot 74 in a manner intended to allow the relative movement. For example, a sidewall of the second slot 74 may be angled to act as a ramp so that the catch 68 of the locking arm 64 can slide out of the second slot 74 when the boot 44 is further rotated. Fig. 10A shows how only a portion of a sidewall 88 of the second slot 74 may be configured in this manner, although in other embodiments not shown an entire length of the sidewall 88 may be configured in this manner. An advantage of the embodiment shown is that the second slot 74 prevents the locking arm 64 from rotating to the third rotational position until the boot 44 is moved rearward so that the catch 68 of the locking arm 64 is positioned in the end of the second slot 74, next to the portion of the sidewall 88 that is angled or otherwise configured to allow the rotation. In other words, the boot 44 in the embodiment shown must be pulled back some distance before the boot 44 can be rotated to the third rotational position. The catch 68 may also be shaped with angled sidewalls to facilitate movement between the first, second, and third rotational positions.

The rotation of the boot 44 from the second rotational position to the third rotational position occurs relative to the outer housing 42. More specifically, the opening 82 (Fig. 1) in the rear wall 76 of the outer housing 42 is shaped or otherwise configured to allow for such relative rotation. Further rotation of the boot 44 beyond the third rotational position results in the outer housing 42 rotating together with boot 44 about the longitudinal axis A, as will be described in greater detail below. Initially, however, in the third rotational position of the boot 44, the locking arm 64 extends over the outer surface 84 of the inner housing 40. At this point there is a limit to rotating the boot 44 further beyond the third rotational position because the outer surface 84 is shaped to block the locking arm 64 from rotating further.

It is possible in the embodiment shown to move the outer housing 42 and boot 44 rearward relative to the inner housing 40 when the boot 44 is in the third rotational position. The terminal end portion 66 of the locking arm 64 travels over or slides along the outer surface 84 during such movement. In some embodiments, the boot 44 can be moved completely off the inner housing 40 without any interference. In other embodiments, the substrate 60 may be designed so that the catch 68 or some other portion of the locking arm 64 is received in the slot 57 or otherwise encounters some interference from a portion of the inner housing 40. The interference may be small enough to be easily overcome by applying additional force when pulling the boot 44 rearward relative to the inner housing 40. To this end, the interference in such embodiments may only be for providing a user with some tactile feedback before moving the boot 44 off the inner housing 40.

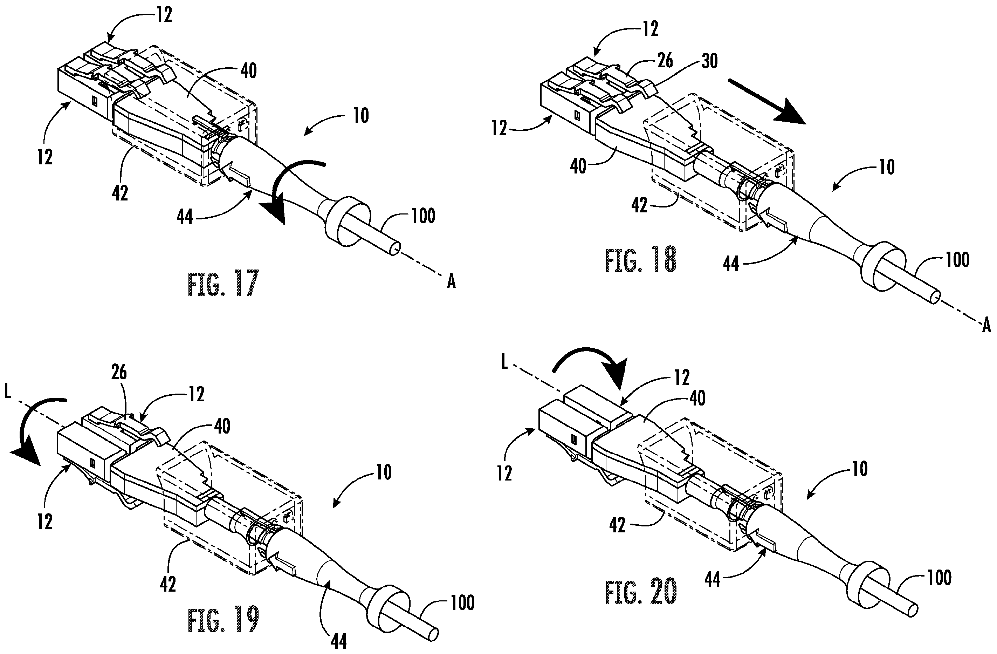

In the example embodiment shown, the ability to rotate to the third rotational position where the outer housing 42 and boot 44 can be moved further rearward allows polarity to be reversed as illustrated in Figs. 17-23. The process for reversing polarity involves rotating the connector sub-assemblies 12 about their respective connector sub-assembly axes L. During normal use of the connector 10, the outer housing 42 prevents such rotation. In other words, even though the connector sub-assemblies 12 may be received in the front side of the inner housing 40 in a manner that allows the connector sub-assemblies 12 to rotate relative to the inner housing 40 about the respective connector sub-assembly axes L, the outer housing 42 normally extends over the latch arms 26 and is shaped with sidewalls or other geometry to normally prevent such rotation. The rotation may be prevented completely or partially (e.g., not permitting rotation more than 90 degrees) prior to retracting the outer housing 42. The first or second rotational position of the boot 44 may not allow the boot 44 and outer housing 42 to move sufficiently rearward to allow the rotation of the connector sub-assemblies 12, but the third rotational position of the boot 44 may do so.

Thus, in the embodiment shown, the process for reversing polarity begins with rotating the boot 44 relative to the inner housing 40 to the third rotational position, as shown in Fig. 17. The boot 44 can then be pulled back (moved axially rearward) relative to the inner housing 40. The outer housing 42 is coupled to the boot 44 in the manner described above and, therefore, moves axially with the boot 44. Fig. 18 illustrates the boot 44 and outer housing 42 in an exaggerated, axially-rearward position merely to provide better visualization. The outer housing 42 no longer extends over the distal end portions 30 of the latch arms 26 after moving the boot 44 and outer housing 42 rearward some distance.

As shown in Figs. 19 and 20, when the outer housing 42 no longer extends over the distal end portions 30 of the latch arms 26, the outer housing 42 no longer prevents the connector sub-assemblies 12 from rotating more than 90 degrees about their respective connector sub-assembly axes L. Indeed, as shown, at this point the connector sub-assemblies 12 may be rotated about their respective longitudinal axes L by 180 degrees to be oriented on an opposite side of the connector 10. The inner housing 40 receives the rear stop components 20 in a manner that allows such rotation in situ. In other words, the rear stop components 20 do not need to be removed from the inner housing 40 to rotate 180 degrees relative to the inner housing 40. The outer housing 42 can remain in a sufficiently rearward position to not interfere with the rotation of the connector sub-assemblies 12.

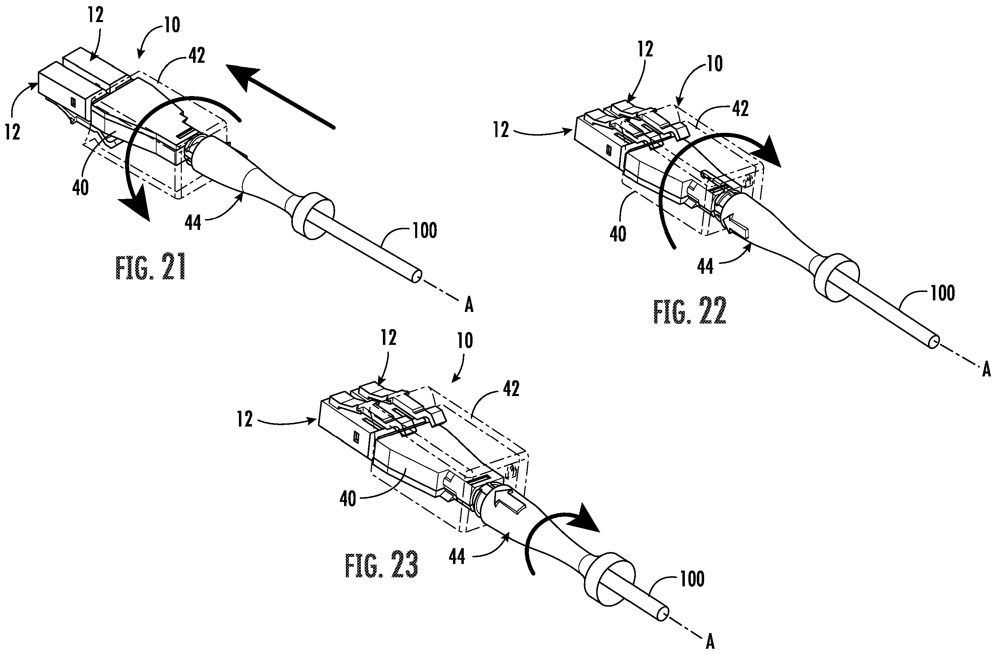

Now referring to Fig. 21, the outer housing 42 and boot 44 can then be rotated 180 degrees about the longitudinal axis A relative to the inner housing 40. The outer housing 42 and boot 44 may rotate together to the opposite side of the connector 10 due the opening 82 (Fig. 1) in the rear wall 76 of the outer housing including a flange or similar structure that prevents the substrate 60 of the boot 44 from further rotating relative to the outer housing 42. In other words, a surface on the substrate 60 may come into contact with a surface in the opening upon rotating to the third rotational position, and then additional relative rotation beyond the third position in one direction (e.g., clockwise in Fig. 21) is not permitted. However, alternative embodiments are also possible where the outer housing 42 and boot 44 are rotated to the opposite side of the connector 10 separately.

Once rotated to the opposite side of the connector 10, the outer housing 42 and boot 44 can be moved axially forward until the substrate 60 of the boot 44 abuts the rear side of the inner housing 40. Fig 21 illustrates the connector 10 after such movement. The entire connector 10 can then be turned over (rotated 180 degrees about the longitudinal axis A), as shown in Fig. 22. Finally, as schematically shown in Fig. 23, the boot 44 can then be rotated about the longitudinal axis A from the third rotational position to the second rotational (unlocked) position or the first rotational (locked) position. The inner housing 40 is designed to provide locked and unlocked positions on each side of the inner housing 40. In other words, the first and second slots 72, 74 discussed above with reference to Figs. 10A and 11A are also provided on an opposite side of the inner housing 40.

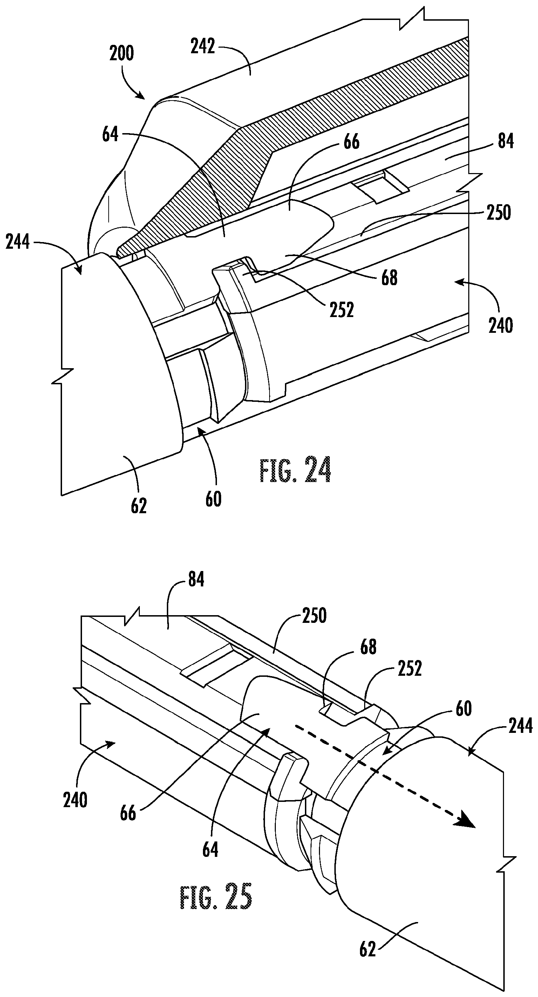

In alternative embodiments, the number of steps to reverse polarity may be reduced even further. For example, Fig. 24 illustrates a portion of a connector 200 according to another embodiment of this disclosure. The connector 200 still includes an inner housing 240, outer housing 242, and boot 244 like the connector 10, except that the components in the embodiment shown in Fig. 24 are designed with different geometries. Similar reference numbers are used to refer to elements on these components that correspond to the same elements on the components of the connector 10.

As shown in Fig. 24, the inner housing 240 may be designed with a rear portion that is generally cylindrical, but with a truncated top and bottom. Additionally, an axially-extending ridge 250 is provided adjacent the truncated top, with the ridge 250 terminating at a rear flange 252 of the inner housing 240. Although hidden from view, the inner housing 240 may have a similar geometry on the opposite side of the connector 200. The ridge 250 and rear flange 252 function in a manner similar to the first slot 72 (Figs. 10A and 11A) on the inner housing 40 of connector 10, as will be apparent below.

Still referring to Fig. 24, the substrate in the embodiment shown still includes the locking arm 64 extending over the rear side of the inner housing 240, but the terminal end portion 66 is shaped to provide the locking arm 64 with a hook-like configuration. The catch 68 in this embodiment is an overhang or lateral extension of the locking arm 64 that is received in the space between the outer surface 84 of the inner housing 240 and the ridge 250. Fig. 24 illustrates the boot 244 in the first rotational, locked position. The boot 244 is prevented from being pulled back axially due to the rear flange 252 blocking the catch 68. In some embodiments there may some minimal axial movement from a forwardmost position of the boot 244 on the inner housing 240, but not sufficient movement for the boot 244 to cause the outer housing 242 to depress the latch arms 26 (not shown in Fig. 24) of the connector 200 in a way that would cause the connector 200 to disengage from an adapter.

Similar to the boot 44 of the connector 10, the boot 244 can be rotated to a second, unlocked position. Fig. 25 illustrates the inner housing 240 and boot 244 after such rotation. The outer housing 242 is not shown to simplify the drawing, but similar to the connector 10, the opening 82 in the rear wall 76 of the outer housing 242 is configured to allow relative rotation of the boot 244 to the second rotational position. The outer housing 242 and boot 244 can be moved together axially when the boot 244 is in the second rotational position, thereby causing the outer housing 242 to depress the latch arms 26 like the outer housing 42.

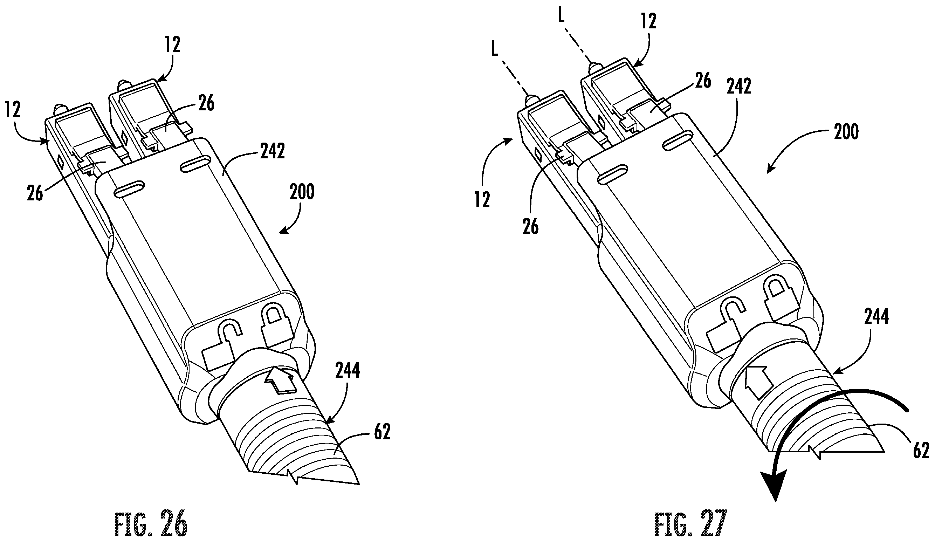

Unlike the connector 10, however, the connector 200 is configured so that the inner housing 240 does not prevent the boot 244 from being moved rearward off of the inner housing 240 when the boot 244 is in the second rotational position. The outer housing 242 and boot 244 may therefore be moved back axially a sufficient distance to not only depress the latch arms 26 (Figs. 26-27), but also allow polarity of the connector 200 to be reversed. The connector 200 is therefore an example of an embodiment that does not require rotation of a boot to a third rotational position to reverse polarity.

Aspects of the connector 200 can be better appreciated with reference to Figs. 26-28. Again, similar reference numbers are used to refer to similar components or portions thereof from the connector 10. Fig. 26 illustrates the connector 200 with the boot 244 in the first rotational position (locked position), and therefore corresponds to Fig. 24. The outer housing 242 and boot 244 are prevented from being pulled back in the manner described above with reference to Fig. 24. Fig. 27 illustrates the connector 200 after rotating the boot 244 to the second rotational position (unlocked position), and therefore corresponds to Fig. 25. The outer housing 242 and boot 244 can be moved together rearward at this point to depress the latch arms 26. The outer housing 242 and boot 244 can even be moved sufficiently rearward so that the outer housing 242 does not extend over the distal end portions 30 of the latch arms 26.

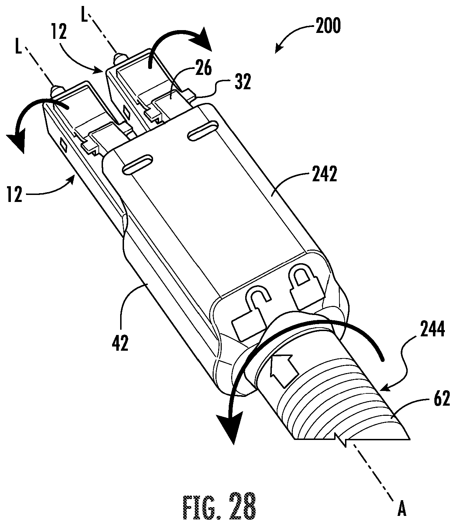

Fig. 28 schematically illustrates how the outer housing 242 is configured to allow the connector sub-assemblies 12 to rotate 180 degrees about their respective longitudinal axes L when the boot 44 is in the second rotational, unlocked position. In some embodiments, the outer housing 144 may be shaped to allow such rotation without being pulled back axially, and in other embodiments the outer housing 242 and boot 244 may need to be pulled back to allow such rotation. For example, some embodiments may require the outer housing 242 to be pulled back to no longer extend over the distal end portions 30 of the latch arms 26 in order to be able to rotate the connector sub-assemblies 12.

The outer housing 242 and boot 244 are pulled back at least some distance before rotating the outer housing 242 and boot 244 to the opposite side of the connector 200. As can be appreciated from Fig. 25, some embodiments may require the substrate 60 of the boot 244 to be pulled off the rear portion of the inner housing 240 before the boot 244 can be rotated 180 degrees. The outer housing 242 may be configured to rotate together with the boot 244, as was discussed above for the connector 10, or may be configured to rotate independently.

After being rotated 180 degrees, the outer housing 242 and boot 244 may then be moved forward to a normal operating position, similar to one the components were in prior to reversing the polarity of the connector 200. Advantageously, the terminal end portion 66 of the locking arm 64 in the embodiment shown in Fig. 25 is shaped with inclined/ramped surfaces that converge towards a tip. This geometry helps direct the substrate 60 to the second rotational position when moving the locking arm 64 back over the rear portion of the inner housing 240. For example, if the boot 244 has been rotated slightly less than 180 degrees, the locking arm 64 may not be aligned properly to advance forward past the rear flange. Additionally, if the outer housing 242 was rotated together with the boot 244, the outer housing 242 may not be properly aligned to advance over the latch arms 26 of the connector sub-assemblies 12. When advancing the outer housing 242 and boot 244 forward in this situation, one of the ramped surfaces of the terminal end portion 66 of the locking arm 64 may contact the rear flange and cause the locking arm 64 to rotate to the correct, aligned position as the advancement continues. In other words, the terminal end portion 66 of the locking arm 64 may be shaped to self-correct misalignment from the intended position (i.e., second rotational position).

It will be apparent to those skilled in optical connectivity that various modifications and variations can be made based on this disclosure. For example, although the example connector 10 described above and shown in the figures is in the form of an LC duplex uniboot connector, various features disclosed may be applicable to different connector configurations and different connector sub-assembly designs. This includes simplex configurations of LC connectors (e.g., which may include a rotatable boot), and both simplex and duplex configurations of different (i.e., non-LC) connector designs. Indeed, in the claims that follow, the use of "a" or "an" in connection with an element (e.g., a connector sub-assembly) refers to "one or more" of the element unless explicitly stated otherwise.

## Claims

1. An optical connector (10), comprising:
a connector sub-assembly (12) including:
a ferrule (14) configured to support at least one optical fiber (102);
a connector body (18) surrounding at least a portion of the ferrule (14); and
a latch arm (26) extending outwardly and rearwardly from a front portion of the connector body (18), wherein an end portion (30) of the latch arm (26) can be depressed toward the connector body (18);
an inner housing (40) having a front side in which a rear portion of the connector sub-assembly (12) is received;
a boot (44) extending from a rear side of the inner housing (40); and
an outer housing (42) coupled to the boot (44) and extending over at least the end portion (30) of the latch arm (26) of the connector sub-assembly (12), wherein the outer housing (42) and the boot (44) are configured to rotate relative to each other about a longitudinal axis of the optical connector (10) but move together along the longitudinal axis;
wherein:
the boot (44) is rotatable relative to the inner housing (40) about the longitudinal axis between a first rotational position and a second rotational position;
in the first rotational position, relative movement between the boot (44) and the inner housing (40) along the longitudinal axis is limited so that the outer housing (42) is not configured to move axially rearward with the boot (44) to depress the end portion (30) of the latch arm (26); and
in the second position, relative movement between the boot (44) and the inner housing (40) along the longitudinal axis is permitted so that the outer housing (42) is configured to move axially rearward with the boot (44) to depress the end portion (30) of the latch arm (26).

2. The optical connector of claim 1, wherein the connector sub-assembly (12) is a first connector sub-assembly (12a), and wherein the optical connector further comprises a second connector sub-assembly (12b) having a rear portion received in the front side of the inner housing (40), wherein the second connector sub-assembly (12b) has a construction similar to the first connector sub-assembly (12a).

3. The optical connector of either claim 1 or 2, wherein the rear portion of the connector sub-assembly (12) is received in the front side of inner housing (40) in a manner that allows the connector sub-assembly (12) to be rotated relative to the inner housing (40) about a connector sub-assembly axis.

4. The optical connector of claim 3, further wherein:
in the first rotational position, the outer housing (42) is configured to restrict the connector sub-assembly (12) from rotating more than 90 degrees about the connector sub-assembly axis.

5. The optical connector of claim 4, further wherein:
in the second rotational position, relative movement between the boot (44) and the inner housing (40) along the longitudinal axis is permitted so that the outer housing (42) is configured to move axially with the boot (44) a sufficient distance to allow the connector sub-assembly (12) to rotate more than 90 degrees about the connector sub-assembly axis.

6. The optical connector of claim 4, further wherein:
in the second rotational position, the outer housing (42) is configured to restrict the connector sub-assembly (12) from rotating more than 90 degrees about the connector sub-assembly axis;
the boot (44) is rotatable to relative to the inner housing (40) about the longitudinal axis between the second rotational position and a third rotational position; and
in the third rotational position, relative movement between the boot (44) and the inner housing (40) along the longitudinal axis is permitted so that the outer housing (42) is configured to move axially with the boot (44) a sufficient distance to allow the connector sub-assembly (12) to rotate more than 90 degrees about the connector sub-assembly axis.

7. The optical connector of any of claims 1-6, wherein the inner housing (40) comprises a base (48) and a cover (52) coupled to the base (48), and wherein the base (48) defines at least one channel extending between the rear side of the inner housing and the front side of the inner housing.

8. The optical connector of any of claims 1-7, wherein:
the boot (44) includes a locking arm (64) having a catch (68);
in the first rotational position, the catch (68) is configured to engage a surface of the inner housing (40) to limit relative movement between the boot (44) and the inner housing (40) along the longitudinal axis to a first distance.

9. The optical connector of claim 8, wherein the first distance is substantially zero.

10. The optical connector of either claim 8 or 9, wherein:
the rear portion of the inner housing (40, 240) defines a rear flange (252) and a ridge (250) that extends axially along the rear portion;
the catch (68) of the locking arm (64) is a lateral extension that is received in space adjacent the ridge (250) when the boot (44) is in the first rotational position; and
the rear flange (252) of the inner housing (40) defines the surface that the catch (68) is configured to engage to limit relative axial movement between the boot (44) and the inner housing (40, 240).

11. The optical connector of any of claims 8-10, wherein:
the boot (44) comprises a substrate (60) formed from a first material and a strain relief component formed from a second material that is less rigid than the first material;
the strain relief component (62) is received over a portion of the substrate (60); and
the substrate (60) defines the locking arm (64).

12. The optical connector of claim 11, wherein the substrate (60) of the boot (44) extends through an opening (82) in a rear wall (76) of the outer housing (42) and defines a flange (78), and wherein the rear wall (76) of the outer housing (42) is positioned between the flange (78) of the substrate (60) and the strain relief component (62).

13. The optical connector of any of claims 1-12, wherein the connector sub-assembly comprises an LC connector according to IEC 61754-20:2012.

14. A cable assembly, comprising:
a cable including at least one optical fiber (102); and
an optical connector according to any of claims 1-13 secured to an end of the cable.

15. A method of removing an optical connector according to any of claims 1-13 from an adapter, comprising:
rotating the boot (44) relative to the inner housing (40, 240) about the longitudinal axis of the connector (10) between the first rotational position and the second rotational position; and
with the boot (44) in the second rotational position, moving the boot relative to the inner housing rearward along the longitudinal axis so that the outer housing moves axially rearward with the boot to depress the end portion of the latch arm of the connector sub-assembly.

## Patentansprüche

1. Optischer Steckverbinder (10), der Folgendes beinhaltet:
eine Steckverbinderunterbaugruppe (12) mit:
einer Ferrule (14), die dafür ausgelegt ist, mindestens eine optische Faser (14) zu halten;
einen Steckverbinderkörper (18), der mindestens einen Teil der Ferrule (14) umgibt; und
einen Verriegelungsarm (26), der sich von einem vorderen Teil des Steckverbinderkörpers (18) nach außen und nach hinten erstreckt, wobei ein Endteil (30) des Verriegelungsarms (26) in Richtung des Steckverbinderkörpers (18) niedergedrückt werden kann;
ein inneres Gehäuse (40) mit einer Vorderseite, in der ein hinterer Teil der Steckverbinderunterbaugruppe (12) aufgenommen ist;
eine Manschette (44), die sich von einer Rückseite des inneren Gehäuses (40) erstreckt; und
ein äußeres Gehäuse (42), das mit der Manschette (44) gekoppelt ist und sich über mindestens den Endteil (30) des Verriegelungsarms (26) der Steckverbinderunterbaugruppe (12) erstreckt, wobei das äußere Gehäuse (42) und die Manschette (44) dafür ausgelegt sind, dass sie sich relativ zueinander um eine Längsachse des optischen Steckverbinders (10) drehen, aber sich zusammen entlang der Längsachse bewegen;
wobei:
die Manschette (44) relativ zum inneren Gehäuse (40) zwischen einer ersten Drehstellung und einer zweiten Drehstellung um die Längsachse drehbar ist;
in der ersten Drehstellung die relative Bewegung zwischen der Manschette (44) und dem inneren Gehäuse (40) entlang der Längsachse begrenzt ist, so dass das äußere Gehäuse (42) nicht dafür ausgelegt ist, mit der Manschette (44) axial nach hinten bewegt zu werden, um den Endteil (30) des Verriegelungsarms (26) niederzudrücken; und
in der zweiten Position die relative Bewegung zwischen der Manschette (44) und dem inneren Gehäuse (40) entlang der Längsachse ermöglicht ist, so dass das äußere Gehäuse (42) dafür ausgelegt ist, mit der Manschette (44) axial nach hinten bewegt zu werden, um den Endteil (30) des Verriegelungsarms (26) niederzudrücken.

2. Optischer Steckverbinder nach Anspruch 1, wobei die Steckverbinderunterbaugruppe (12) eine erste Steckverbinderunterbaugruppe (12a) ist und wobei der optische Steckverbinder ferner eine zweite Steckverbinderunterbaugruppe (12b) mit einem hinteren Teil beinhaltet, der in der Vorderseite des inneren Gehäuses (40) aufgenommen ist, wobei die zweite Steckverbinderunterbaugruppe (12b) einen ähnlichen Aufbau wie die erste Steckverbinderunterbaugruppe (12a) aufweist.

3. Optischer Steckverbinder nach Anspruch 1 oder 2, wobei der hintere Teil der Steckverbinderunterbaugruppe (12) so in der Vorderseite des inneren Gehäuses (40) aufgenommen ist, dass die Steckverbinderunterbaugruppe (12) relativ zum inneren Gehäuse (40) um eine Steckverbinderunterbaugruppenachse gedreht werden kann.

4. Optischer Steckverbinder nach Anspruch 3, wobei ferner:
in der ersten Drehstellung das äußere Gehäuse (42) dafür ausgelegt ist, ein Drehen der Steckverbinderunterbaugruppe (12) um mehr als 90 Grad um die Steckverbinderunterbaugruppenachse zu verhindern.

5. Optischer Steckverbinder nach Anspruch 4, wobei ferner:
in der zweiten Drehstellung die relative Bewegung zwischen der Manschette (44) und dem inneren Gehäuse (40) entlang der Längsachse ermöglicht ist, so dass das äußere Gehäuse (42) dafür ausgelegt ist, um einen ausreichenden Abstand axial mit der Manschette (44) bewegt zu werden, um das Drehen der Steckverbinderunterbaugruppe (12) um mehr als 90 Grad um die Steckverbinderunterbaugruppenachse zu ermöglichen.

6. Optischer Steckverbinder nach Anspruch 4, wobei ferner:
in der zweiten Drehstellung das äußere Gehäuse (42) dafür ausgelegt ist, ein Drehen der Steckverbinderunterbaugruppe (12) um mehr als 90 Grad um die Steckverbinderunterbaugruppenachse zu verhindern;
die Manschette (44) relativ zu dem inneren Gehäuse (40) zwischen der zweiten Drehstellung und einer dritten Drehstellung um die Längsachse drehbar ist; und
in der dritten Drehstellung die relative Bewegung zwischen der Manschette (44) und dem inneren Gehäuse (40) entlang der Längsachse ermöglicht ist, so dass das äußere Gehäuse (42) dafür ausgelegt ist, sich axial mit der Manschette (44) um einen ausreichenden Abstand zu bewegen, um der Steckverbinderunterbaugruppe (12) das Drehen um mehr als 90 Grad um die Steckverbinderunterbaugruppenachse zu ermöglichen.

7. Optischer Steckverbinder nach einem der Ansprüche 1 bis 6, wobei das innere Gehäuse (40) eine Basis (48) und eine mit der Basis (48) gekoppelte Abdeckung (52) beinhaltet und wobei die Basis (48) mindestens einen Kanal definiert, der sich zwischen der Rückseite des inneren Gehäuses und der Vorderseite des inneren Gehäuses erstreckt.

8. Optischer Steckverbinder nach einem der Ansprüche 1 bis 7, wobei:
die Manschette (44) einen Arretierungsarm (64) mit einer Raste (68) aufweist;
in der ersten Drehstellung die Raste (68) dafür ausgelegt ist, mit einer Oberfläche des inneren Gehäuses (40) in Eingriff zu kommen, um eine Bewegung zwischen der Manschette (44) und dem inneren Gehäuse (40) entlang der Längsachse auf einen ersten Abstand zu begrenzen.

9. Optischer Steckverbinder nach Anspruch 8, wobei der erste Abstand im Wesentlichen null ist.

10. Optischer Steckverbinder nach Anspruch 8 oder 9, wobei:
der hintere Teil des inneren Gehäuses (40, 240) einen hinteren Flansch (252) und eine sich axial an dem hinteren Teil entlang erstreckende Erhöhung (250) definiert;
die Raste (68) des Arretierungsarms (64) eine seitliche Verlängerung ist, die in einem an die Erhöhung (250) angrenzenden Raum aufgenommen ist, wenn die Manschette (44) sich in der ersten Drehstellung befindet; und
der hintere Flansch (252) des inneren Gehäuses (40) die Oberfläche definiert, die dafür ausgelegt ist, dass die Raste (68) mit ihr in Eingriff kommt, um eine relative axiale Bewegung zwischen der Manschette (44) und dem inneren Gehäuse (40, 240) zu begrenzen.

11. Optischer Steckverbinder nach einem der Ansprüche 8 bis 10, wobei:
die Manschette (44) ein aus einem ersten Material hergestelltes Trägerelement (60) und ein Zugentlastungsteil, das aus einem zweiten Material, das weniger steif als das erste Material ist, hergestellt ist, beinhaltet;
das Zugentlastungsteil (62) auf einem Teil des Trägerelements (60) aufgenommen ist; und
das Trägerelement (60) den Arretierungsarm (64) definiert.

12. Optischer Steckverbinder nach Anspruch 11, wobei das Trägerelement (60) der Manschette (44) sich durch eine Öffnung (82) in einer hinteren Wand (76) des äußeren Gehäuses (42) erstreckt und einen Flansch (78) definiert und wobei die hintere Wand (76) des äußeren Gehäuses (42) zwischen dem Flansch (78) des Trägerelements (60) und dem Zugentlastungsteil (62) positioniert ist.

13. Optischer Steckverbinder nach einem der Ansprüche 1 bis 12, wobei die Steckverbinderunterbaugruppe einen LC-Steckverbinder nach IEC 61754-20:2012 beinhaltet.

14. Kabelanordnung, die Folgendes beinhaltet:
ein Kabel mit mindestens einer optischen Faser (102); und
einen optischen Steckverbinder nach einem der Ansprüche 1 bis 13, der an einem Ende des Kabels befestigt ist.

15. Verfahren zum Entfernen eines optischen Steckverbinders nach einem der Ansprüche 1 bis 13 von einem Adapter, das Folgendes beinhaltet:
Drehen der Manschette (44) relativ zu dem inneren Gehäuse (40, 240) zwischen der ersten Drehstellung und der zweiten Drehstellung um die Längsachse des Steckverbinders (10); und,
wenn sich die Manschette (44) in der zweiten Drehstellung befindet, Bewegen der Manschette relativ zu dem inneren Gehäuse entlang der Längsachse nach hinten, so dass sich das äußere Gehäuse mit der Manschette axial nach hinten bewegt, um den Endteil des Verriegelungsarms der Steckverbinderunterbaugruppe niederzudrücken.

## Revendications

1. Connecteur optique (10), comprenant :
un sous-ensemble connecteur (12) comprenant :
une virole (14) configurée pour supporter au moins une fibre optique (102) ;
un corps de connecteur (18) entourant au moins une partie de la virole (14) ; et
un bras loquet (26) s'étendant vers l'extérieur et vers l'arrière depuis une partie avant du corps de connecteur (18), dans lequel une partie d'extrémité (30) du bras loquet (26) peut être enfoncée vers le corps de connecteur (18) ;
un boîtier intérieur (40) présentant une face avant dans laquelle est reçue une partie arrière du sous-ensemble connecteur (12) ;
un soufflet (44) s'étendant depuis une face arrière du boîtier intérieur (40) ; et
un boîtier extérieur (42) couplé au soufflet (44) et s'étendant par-dessus au moins la partie d'extrémité (30) du bras loquet (26) du sous-ensemble connecteur (12), dans lequel le boîtier extérieur (42) et le soufflet (44) sont configurés pour tourner l'un par rapport à l'autre autour d'un axe longitudinal du connecteur optique (10) mais se déplacer ensemble le long de l'axe longitudinal ;
dans lequel :
le soufflet (44) est rotatif par rapport au boîtier intérieur (40) autour de l'axe longitudinal entre une première position de rotation et une deuxième position de rotation ;
dans la première position de rotation, un mouvement relatif entre le soufflet (44) et le boîtier intérieur (40) le long de l'axe longitudinal est limité de telle sorte que le boîtier extérieur (42) ne soit pas configuré pour se déplacer axialement vers l'arrière avec le soufflet (44) pour enfoncer la partie d'extrémité (30) du bras loquet (26) ; et
dans la deuxième position, un mouvement relatif entre le soufflet (44) et le boîtier intérieur (40) le long de l'axe longitudinal est autorisé de telle sorte que le boîtier extérieur (42) soit configuré pour se déplacer axialement vers l'arrière avec le soufflet (44) pour enfoncer la partie d'extrémité (30) du bras loquet (26).

2. Connecteur optique selon la revendication 1, dans lequel le sous-ensemble connecteur (12) est un premier sous-ensemble connecteur (12a), et dans lequel le connecteur optique comprend en outre un second sous-ensemble connecteur (12b) présentant une partie arrière reçue dans la face avant du boîtier intérieur (40), dans lequel le second sous-ensemble connecteur (12b) a une construction similaire à celle du premier sous-ensemble connecteur (12a).

3. Connecteur optique selon la revendication 1 ou 2, dans lequel la partie arrière du sous-ensemble connecteur (12) est reçue dans la face avant du boîtier intérieur (40) de manière à permettre une rotation du sous-ensemble connecteur (12) par rapport au boîtier intérieur (40) autour d'un axe de sous-ensemble connecteur.

4. Connecteur optique selon la revendication 3, dans lequel en outre :
dans la première position de rotation, le boîtier extérieur (42) est configuré pour empêcher le sous-ensemble connecteur (12) de tourner de plus de 90 degrés autour de l'axe de sous-ensemble connecteur.

5. Connecteur optique selon la revendication 4, dans lequel en outre :
dans la deuxième position de rotation, un mouvement relatif entre le soufflet (44) et le boîtier intérieur (40) est permis le long de l'axe longitudinal est permis de telle sorte que le boîtier extérieur (42) soit configuré pour se déplacer axialement avec le soufflet (44) sur une distance suffisante pour permettre au sous-ensemble connecteur (12) de tourner de plus de 90 degrés autour de l'axe de sous-ensemble connecteur.

6. Connecteur optique selon la revendication 4, dans lequel en outre :
dans la deuxième position de rotation, le boîtier extérieur (42) est configuré pour empêcher le sous-ensemble connecteur (12) de tourner de plus de 90 degrés autour de l'axe de sous-ensemble connecteur ;
le soufflet (44) peut tourner par rapport au boîtier intérieur (40) autour de l'axe longitudinal entre la deuxième position de rotation et une troisième position de rotation ; et
dans la troisième position de rotation, un mouvement relatif entre le soufflet (44) et le boîtier intérieur (40) le long de l'axe longitudinal est permis de telle sorte que le boîtier extérieur (42) soit configuré pour se déplacer axialement avec le soufflet (44) sur une distance suffisante pour permettre au sous-ensemble connecteur (12) de tourner de plus de 90 degrés autour de l'axe de sous-ensemble connecteur.

7. Connecteur optique selon l'une quelconque des revendications 1 à 6, dans lequel le boîtier intérieur (40) comprend une base (48) et un couvercle (52) couplé à la base (48), et dans lequel la base (48) définit au moins un canal s'étendant entre la face arrière du boîtier intérieur et la face avant du boîtier intérieur.

8. Connecteur optique selon l'une quelconque des revendications 1 à 7, dans lequel :
le soufflet (44) comporte un bras de verrouillage (64) présentant un crochet (68) ;
dans la première position de rotation, le crochet (68) est configuré pour s'enclencher avec une surface du boîtier intérieur (40) afin de limiter à une première distance le mouvement relatif entre le soufflet (44) et le boîtier intérieur (40) le long de l'axe longitudinal.

9. Connecteur optique selon la revendication 8, dans lequel la première distance est essentiellement nulle.

10. Connecteur optique selon l'une quelconque des revendications 8 ou 9, dans lequel :
la partie arrière du boîtier intérieur (40, 240) définit une bride arrière (252) et une crête (250) qui s'étend axialement le long de la partie arrière ;
le crochet (68) du bras de verrouillage (64) est une extension latérale reçue dans un espace adjacent à la crête (250) lorsque le soufflet (44) est dans la première position de rotation ; et
la bride arrière (252) du boîtier intérieur (40) définit la surface avec laquelle le crochet (68) est censé s'enclencher afin de limiter le mouvement axial relatif entre le soufflet (44) et le boîtier intérieur (40, 240).

11. Connecteur optique selon l'une quelconque des revendications 8 à 10, dans lequel :
le soufflet (44) comprend un substrat (60) formé d'un premier matériau et un composant de détente de contraintes formé d'un second matériau moins rigide que le premier ;
le composant de détente de contraintes (62) est reçu par-dessus une partie du substrat (60) ; et
le substrat (60) définit le bras de verrouillage (64).

12. Connecteur optique selon la revendication 11, dans lequel le substrat (60) du soufflet (44) s'étend à travers une ouverture (82) dans une paroi arrière (76) du boîtier extérieur (42) et définit une bride (78), et dans lequel la paroi arrière (76) du boîtier extérieur (42) est positionnée entre la bride (78) du substrat (60) et le composant de détente de contraintes (62).

13. Connecteur optique selon l'une quelconque des revendications 1 à 12, dans lequel le sous-ensemble connecteur comprend un connecteur LC selon la norme IEC 61754-20:2012.

14. Ensemble câble, comprenant :
un câble comportant au moins une fibre optique (102) ; et
un connecteur optique selon l'une quelconque des revendications 1 à 13 fixé à une extrémité du câble.

15. Procédé de retrait d'un connecteur optique selon l'une quelconque des revendications 1 à 13 d'un adaptateur, comprenant :
la rotation du soufflet (44) par rapport au boîtier intérieur (40, 240) autour de l'axe longitudinal du connecteur (10) entre la première position de rotation et la deuxième position de rotation ; et
avec le soufflet (44) dans la deuxième position de rotation, le déplacement du soufflet par rapport au boîtier intérieur vers l'arrière le long de l'axe longitudinal de telle sorte que le boîtier extérieur se déplace axialement vers l'arrière avec le soufflet pour enfoncer la partie d'extrémité du bras de verrouillage du sous-ensemble connecteur.
